# FASCICULE DE BREVET EUROPEEN

(11) **EP 2 766 537 B1**
(45) Date de publication et mention de la délivrance du brevet: **09.01.2019**
(21) Numéro de dépôt: 12779123.4
(22) Date de dépôt: 11.10.2012
(51) Int. Cl.: E04B 9/04, G07F 15/00, B32B 43/00

(54) **DISPOSITIF ET PROCÉDÉ DE REVÊTEMENT DE PANNEAUX DE FAUSSE PAROI AVEC UN DISPOSITIF DE RÉHABILITATION**
VORRICHTUNG UND VERFAHREN ZUM BESCHICHTEN VON HOHLWANDPLATTEN MIT EINER RESTORATIONSVORRICHTUNG
DEVICE AND METHOD FOR COVERING FALSE-WALL PANELS WITH A RESTORATION DEVICE

(30) Priorité: 11.10.2011 FR 1103096
(43) Date de publication de la demande: 20.08.2014
(73) Titulaire: Plafonds Converto Inc., Québec G6G 2B8 (CA)
(72) Inventeur: SCHERRER, Jean-Marc, 68400 Riedisheim (FR); MAHEUX, Mario, Thetford Mines Québec G6G 5R7 (CA)
(74) Mandataire: IP Trust
(86) Numéro de dépôt international: PCT/FR2012/052312
(87) Numéro de publication internationale: WO 2013/054047

(56) Documents cités:
- FR-A1- 2 793 505

## Description

### Domaine technique

La présente invention concerne un dispositif de mise sous tension d'une toile d'un dispositif de réhabilitation d'un panneau amovible d'une fausse paroi telle que, par exemple, un faux plafond et un faux mur. La présente invention concerne également le procédé de revêtement d'un tel panneau mettant en oeuvre ledit dispositif.

### Technique antérieure

Il est connu depuis longtemps des fausses parois disposées parallèlement à une paroi du local de sorte à laisser un espace résiduel situé entre la paroi dudit local et ladite toile. Cet espace résiduel, aussi nommé vélum, permet de loger tous les équipements inesthétiques tels que des câbles électriques, des tuyauteries, etc. Ces fausses parois, notamment des faux plafonds suspendus, comportent soit des panneaux amovibles suspendus à un quadrillage de profilés avantageusement en alliage léger, soit une nappe souple, généralement opaque, déformée par tension afin que ses bords, pourvus de moyens d'accrochage, puissent venir se fixer à des lisses d'accrochage fixées sur les murs du local par exemple.

Concernant les panneaux amovibles, ces derniers se dégradent avec le temps perdant notamment leur aspect esthétique d'origine. Pour remédier à ce problème, il est possible de changer le (ou les) panneau(x) dégradé(s) et refaire, le cas échéant, les découpes et perçages présent sur le (ou les) panneau(x) d'origine. Cette méthode est longue notamment lorsqu'il est nécessaire de refaire dans le nouveau panneau les découpes et perçages éventuels, mais également coûteuse car il faut acheter un nouveau panneau. De plus, le (ou les) panneau(x) d'origine dégradés sont jetés ou partiellement recyclés ce qui va à l'encontre de la tendance actuelle qui tend à limiter le volume des déchets pour des raisons écologiques évidentes.

FR 2 793 505 décrit un dispositif de tension selon le préambule de la revendication 1.

### Exposé de l'invention

La présente invention vise à remédier aux différents inconvénients décrits précédemment en proposant un dispositif et un procédé permettant de réhabiliter de façon simple, rapide et particulièrement esthétique des panneaux amovibles au moins en partie dégradés d'une fausse paroi.

A cet égard, il est donc proposé un dispositif de tension de la toile d'un dispositif de réhabilitation d'un panneau amovible, comprenant au moins une structure, un caisson thermique disposé à l'intérieur de ladite structure et apte à chauffer ladite toile souple, un cadre interne solidaire de façon élastique dudit caisson thermique, et au moins un actionneur solidaire de la structure et apte à mettre en mouvement le caisson thermique de sorte à déplacer le caisson thermique entre une position "toile au repos" et une position "toile tendue", le dispositif étant caractérisé en ce que : (a) l'actionneur est en outre apte à mettre en mouvement le cadre interne entre une position "toile au repos" et une position intermédiaire située entre lesdites positions "toile au repos" et "toile tendue", la toile souple étant en appui sur une partie du caisson thermique et maintenue par son bord périphérique entre le cadre interne et la structure ; (b) le caisson thermique comporte un caisson creux de forme globalement parallélépipédique contenant au moins un générateur de chaleur et comprenant au moins une face inférieure et une face supérieure munie d'une pluralité d'orifices débouchant destinés à laisser passer uniformément la chaleur générée par le générateur de chaleur ; et (c) le caisson thermique comprend un cadre extérieur disposé sur le dessus de sa face supérieure et servant d'appui à la toile, de sorte à créer un espace résiduel entre la toile et ladite face supérieure, lorsque la toile souple est tendue.

De manière préférée, le cadre extérieur est réalisé à partir de profilés aboutés en forme générale de L ouvert comprenant chacun une première aile horizontale fixée pour être en contact sur le dessus de ladite face supérieure et une deuxième aile servant d'appui à la toile.

De manière avantageuse, le cadre interne comporte des profilés aboutés de section globalement rectangulaire et est solidaire dudit caisson thermique grâce des organes de fixation élastique.

Ledit cadre interne comporte avantageusement au moins deux profilés opposés de dimensions suffisantes pour venir en butée sur la structure, cette position définissant la position intermédiaire.

Selon un mode de réalisation préférée, le cadre interne comporte des profilés de maintien de la toile.

De manière préférée, le dispositif de tension comporte deux actionneurs, chacun étant de type un vérin électrique linéaire intégré dans un guidage stable.

Enfin, la présente invention concerne aussi un procédé de revêtement d'un panneau amovible d'une fausse paroi avec un dispositif de réhabilitation selon l'invention remarquable en ce qu'il comprend au moins les étapes suivantes prises successivement ou non :
- mise sous tension de la toile souple avec le dispositif de tension selon l'invention ;
- mise en place en vis-à-vis d'au moins deux profilés d'habillage respectivement le long de deux zones opposées dudit bord périphérique du panneau amovible ;
- application de l'ensemble panneau amovible-profilés d'habillage sur la toile tendue ;
- application d'adhésif sur le pourtour de l'ensemble panneau amovible-profilés d'habillage ;
- découpe de l'excédent de toile dépassant du panneau amovible.

De manière avantageuse, l'étape de mise sous tension de la toile avec le dispositif de tension comprend les étapes suivantes :
- mise en place de la toile sur le caisson thermique et le cadre interne, le caisson thermique et le cadre interne étant en position "toile au repos" ;
- mise en marche des générateurs de chaleur ;
- mise en mouvement du caisson thermique par au moins un actionneur depuis la position "toile au repos" jusqu'à la position intermédiaire ;
- mise en mouvement du caisson thermique par l'actionneur depuis la position "intermédiaire" jusqu'à la position "toile tendue" de sorte à mettre sous tension la toile.

De préférence, l'étape d'application d'adhésif est précédée d'une étape de rectification du bord périphérique du panneau amovible.

### Description sommaire des figures

D'autres avantages et caractéristiques ressortiront mieux de la description qui va suivre de plusieurs variantes d'exécution, données à titre d'exemples non limitatifs, d'un dispositif de tension de toile souple conforme à l'invention, en référence aux dessins annexés sur lesquels :
- la figure 1 est une coupe verticale du dispositif de tension selon l'invention d'une toile du dispositif de réhabilitation de la figure 6, en position "toile au repos" ;
- la figure 2 est une coupe verticale du dispositif de tension de la figure 1, dans une position intermédiaire ;
- la figure 3 est une coupe verticale du dispositif de tension de la figure 1, en position "toile tendue" ;
- la figure 4 est une coupe verticale du dispositif de tension de la figure 3, lorsque que l'on approche un panneau amovible de la toile souple ;
- la figure 5 est une coupe verticale du dispositif de tension de la figure 3, lorsque que le panneau amovible est en contact avec la toile souple ;
- la figure 6 est une coupe verticale du panneau amovible revêtu de la toile souple.

### Meilleure manière de réaliser l'invention technique

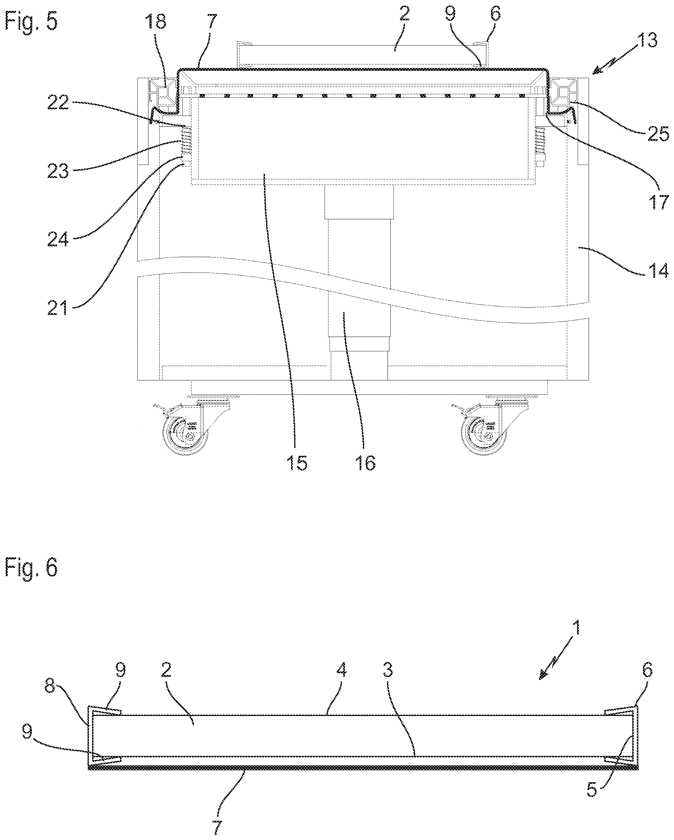

La figure 6 représente un dispositif de réhabilitation 1 selon l'invention d'un panneau amovible 2 d'une fausse paroi d'un local telle que, par exemple, un faux plafond ou un faux mur. Ledit panneau amovible 2 comporte une face externe 3 visible depuis le local, une face interne 4 située du coté opposée de la face externe 3 et un bord périphérique 5 joignant les faces externe 3 et interne 4. Ledit dispositif de réhabilitation 1 comprend au moins deux profilés d'habillage 6 dont la section verticale est en forme générale de C dont de préférence les extrémités libres se resserrent l'une vers l'autre, et fixés en vis-à-vis respectivement le long de deux zones opposées du bord périphérique 5 dudit panneau amovible 2, et une toile 7 fixée tendue sur les au moins deux profilés d'habillage 6. De préférence, les profilés d'habillage 6 forment un cadre fermé fixé le long de la totalité dudit bord périphérique 5.

Chaque profilé d'habillage 6 comporte donc une âme 8 et deux ailes 9 s'étendant des extrémités de ladite âme 8, lesdites ailes 9 en formant un angle compris entre 0 et 45°. Lorsque que le profilé d'habillage 6 est fixé sur le panneau amovible 2, l'âme 8 est en contact avec le bord périphérique 5 et les ailes 9 sont en contact, au moins à leur extrémité libre, respectivement avec les faces externe 3 et interne 4 (Cf. figure 6). Chaque profilé d'habillage 6 est fixé sur le panneau amovible 2 par tous moyens et/ou techniques appropriés connus de l'Homme du Métier. Ainsi, chaque profilé d'habillage 6 pourra, par exemple, être monté à force, collé, cloué ou encore vissé sur le panneau amovible 2.

La toile souple 7 est avantageusement extensible et réalisée à partir de feuille en matériau polymère tel que le polychlorure de vinyle, ledit matériau étant pourvu de nombreuses qualités telles que notamment : résistance au feu, étanchéité à l'air comme à la poussière ou à l'humidité, facilité d'entretien, performance acoustique etc. La toile 7 est fixée tendue sur les profilés d'habillage 6 en étant au moins en appui sur leurs ailes 9 respectivement en contact avec les faces externe 3 et interne 4 du panneau amovible 2. Par ailleurs, la toile souple 7 pourra être au moins en partie perforée pour accroître l'absorption acoustique du local.

Avec cette configuration, on comprend bien que la toile 7 n'est pas en contact avec ladite face externe 3 et que les aspérités et autres creux de la face externe 3 du panneau amovible 2 ne sont plus apparents. En effet, si la toile 7 était posée directement sur le panneau amovible 2, on comprend bien que les aspérités apparaîtraient toujours après la mise en place de la toile 7 créant un aspect inesthétique. On évite cet inconvénient en mettant en place sur le panneau amovible 2 un profilé d'habillage 6 et en fixant la toile 7 sur ledit profilé d'habillage 6. La toile 7 est fixée sur les profilés d'habillage 6 avantageusement par un adhésif et plus particulièrement par collage par capillarité.

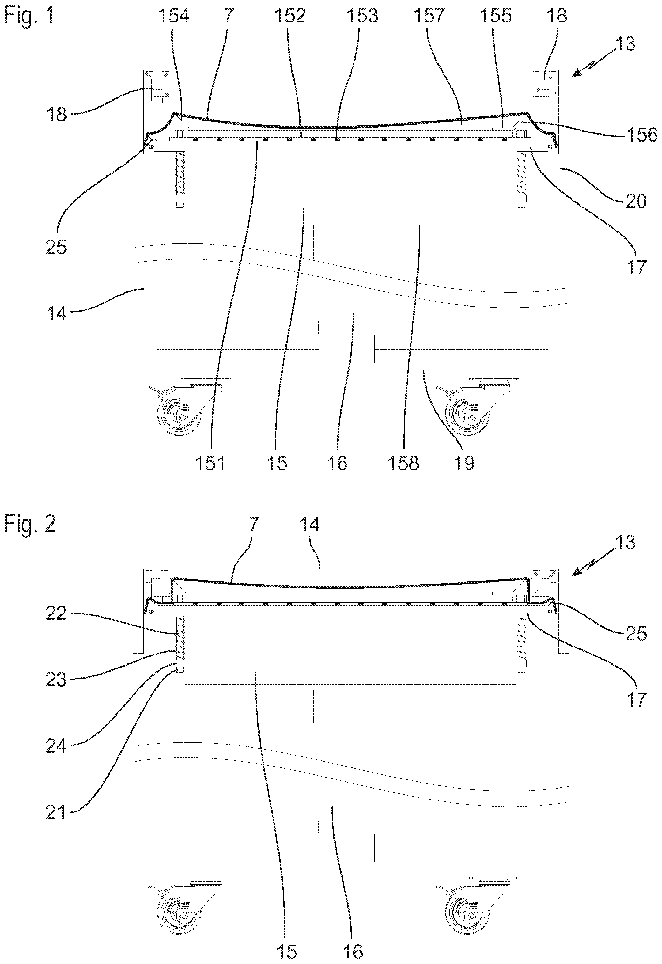

Pour tendre la toile 7 avant sa fixation, on pourra tirer à la main sur la toile 7, mais pour obtenir une tension uniforme et rapide, on pourra avantageusement utiliser le dispositif de tension 13 représenté sur les figures 1 à 5.

Le dispositif de tension 13 comporte au moins une structure 14, un caisson thermique 15 disposé à l'intérieur de ladite structure 14, au moins un actionneur 16 et un cadre interne 17 solidaire dudit caisson thermique 15, ledit caisson thermique 15 étant apte à être mis en mouvement entre une position "toile au repos" et une position "toile tendue" par ledit actionneur 16.

La structure 14 est munie d'au moins un cadre supérieur 18 globalement tubulaire, un fond 19 et une pluralité de pieds 20 reliant ledit cadre supérieur 18 au fond 19.

Le caisson thermique 15 est un caisson creux de forme globalement parallélépipédique contenant au moins un générateur de chaleur (non représenté) et comprenant au moins une face inférieure 151 et une face supérieure 152 munie d'une pluralité d'orifices 153 débouchants destinés à laisser passer uniformément, de l'intérieur vers l'extérieur dudit caisson thermique 15, la chaleur générée par le(s) générateur(s) de chaleur.

De manière avantageuse, le caisson thermique 15 contient deux générateurs de chaleur disposés à l'intérieur dudit caisson thermique 15 à chacune de ses extrémités longitudinales.

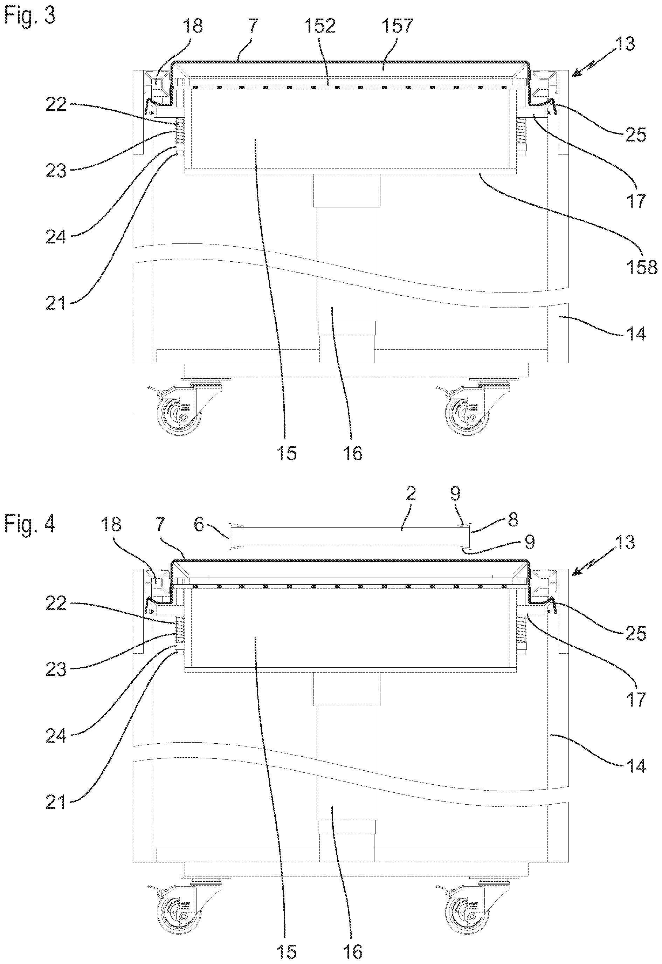

En outre, le caisson thermique 15 comprend un cadre extérieur 154 disposé sur le dessus de sa face supérieure 152. Ce cadre extérieur 154 est de préférence réalisé à partir de profilés aboutés en forme générale de L ouvert comprenant chacun une première aile 155 horizontale agencée pour être en contact avec le dessus de ladite face supérieure 152 de sorte à permettre la fixation dudit cadre extérieur 154 sur le caisson thermique 15 par tout moyen approprié tel que des vis par exemple, et une deuxième aile 156 inclinée s'étendant vers l'extérieur dudit caisson et agencée pour servir d'appui à la toile 7 lorsqu'elle est mise en place sur le dispositif de tension 13. Ce cadre extérieur 154 permet de créer un espace résiduel 157 entre le dessous de la toile 7 et le dessus de la face supérieure 152 du caisson thermique 15. Cet espace résiduel 157 permet, lorsque la toile souple 7 est tendue, d'éviter tout contact entre ladite toile 7 et la face supérieure 152 du caisson thermique 15, comme cela est représenté sur la figure 3.

Le caisson thermique 15 est apte à être mis en mouvement entre une position "toile au repos" et une position "toile tendue" par au moins un actionneur 16. Le dispositif de tension 13 comprend avantageusement deux actionneurs 16 disposés chacun entre le fond 19 et le dessous du caisson thermique 15 et plus particulièrement au voisinage du milieu du bord latéral de la face inférieure 158 du caisson thermique 15.

Chaque actionneur 16 est de préférence un vérin électrique linéaire intégré dans un guidage stable de type colonne télescopique. Ces actionneurs 16 sont reliés à un boitier de commande (non représenté) disposé par exemple sur la structure 14 permettant d'ajuster, de synchroniser ou encore d'arrêter la poussée desdits actionneurs 16. Le boîtier de commande possède de préférence trois réglages de tension prédéterminés selon la densité des différentes toiles souples 7.

Le cadre interne 17 est un cadre de préférence réalisé à partir de profilés aboutés de section globalement rectangulaire et est solidaire dudit caisson thermique 15 grâce à des organes de fixation 21 élastique. Ces derniers sont tels qu'ils exercent toujours un effort tendant à maintenir le contact entre le cadre interne 17 et le caisson thermique 15.

De préférence, ces organes de fixation 21 sont des ensembles (vis 22-ressort 23-écrou 24) répartis le long de la périphérie dudit caisson thermique 15. Le ressort 23 est un ressort hélicoïdal de compression disposé autour de la vis 22 entre la face inférieure du cadre interne 17 et l'écrou 24, ledit ressort 23 étant tel que, lorsque le caisson thermique 15 s'écarte du cadre interne 17 pour ne plus être en contact avec ce dernier, il se comprime et exerce un effort tendant à rapprocher le caisson thermique 15 du cadre interne 17.

De ce fait, le cadre interne 17 est également mobile sur au moins une partie de la course du caisson thermique 15 définie entre sa position "toile au repos" et sa position "toile tendue". En effet, le cadre interne 17 comporte au moins deux profilés opposés de dimensions suffisantes pour venir en butée sous le cadre supérieur 18 de la structure 14, avantageusement de part et d'autre du caisson thermique 15, afin de stopper la course dudit cadre interne 17 avant ladite position "toile tendue" tout en permettant au caisson thermique 15 de continuer sa course jusqu'à cette position "toile tendue". La position dans laquelle le cadre interne 17 est en butée sous le cadre supérieur 18 de la structure 14 est désignée, dans ce qui suit, par position "intermédiaire". Cette position "intermédiaire" permet d'immobiliser le bord périphérique de la toile 7 en le maintenant serré entre le cadre interne 17 et le cadre supérieur 18 de la structure 14.

On comprend bien que les organes de fixation 21 élastique garantissent une répartition homogène de l'effort de poussée de l'actionneur 16 sur l'ensemble de la toile 7 de sorte à avoir une tension parfaite de cette dernière.

Par ailleurs, le cadre interne 17 comporte également des profilés de maintien 25 amovibles disposés avantageusement le long de ses faces longitudinales, maintenus sur le cadre interne 17 par des moyens appropriés tels que des boulons avantageusement munis de ressorts par exemple, et permettant de maintenir la toile 7 entre ledit cadre interne 17 et le cadre supérieur 18 de la structure 14, et en appui sur l'extrémité libre de la deuxième aile 156 des profilés du cadre extérieur 154 du caisson thermique 15.

Ainsi, le bord périphérique de la toile 7 est maintenu serré entre, d'une part, le dessous du cadre supérieur 18 de la structure 14 et, d'autre part, lesdits profilés de maintien 25 et cadre interne 17. De préférence, une bande de joint de type néoprène, par exemple, peut être fixé sur la face supérieure du cadre interne 17 de façon à empêcher le glissement de la toile 7 souple lorsqu'elle est mise sous tension.

En référence aux figures 1 à 6 et avec une telle configuration du dispositif de tension 13, pour mettre sous tension la toile 7 d'un dispositif de réhabilitation 1 afin de revêtir un panneau amovible 2, on procède selon la pluralité d'étapes décrites ci-après.

En référence à la figure 1, la toile 7 est déposée sur le caisson thermique 15 et le cadre interne 17, ladite toile 7 étant en appui sur l'extrémité libre de la deuxième aile 156 des profilés du cadre extérieur 154 du caisson thermique 15, le caisson thermique 15 et le cadre interne 17 étant en position "toile au repos".

Les générateurs de chaleur sont ensuite mis en marche de sorte à chauffer la toile 7 afin d'augmenter l'élasticité de ladite toile 7.

Le caisson thermique 15, mais également le cadre interne 17, sont ensuite mis en mouvement par au moins un actionneur 16 depuis position "toile au repos" jusqu'à la position intermédiaire, où le cadre interne 17 est en butée contre le cadre supérieur 18 de la structure 14, conformément à la figure 2, le bord de la toile 7 est alors maintenu serré entre, d'une part, le cadre supérieur 18 de la structure 14 et, d'autre part, lesdits profilés de maintien 25 et cadre interne 17.

L'actionneur 16 continue à mettre en mouvement seulement le caisson thermique 15 de sorte à mettre en tension la toile 7, dont le bord périphérique est maintenu sur le cadre interne 17, par le déplacement de l'extrémité libre de la deuxième aile 156 des profilés du cadre extérieur 154 du caisson thermique 15, conformément à la figure 3.

Le panneau amovible 2 est alors éventuellement légèrement rectifié sur son bord périphérique 5 afin de pouvoir fixer au moins deux profilés d'habillage 6 en vis-à-vis respectivement le long de deux zones opposées du bord périphérique 5 dudit panneau amovible 2.

Ensuite, on applique l'ensemble panneau amovible 2-profilés d'habillage 6 sur la toile 7, puis on dépose de l'adhésif, par exemple de la colle, sur le pourtour de l'ensemble panneau amovible 2-profilés d'habillage 6, et notamment à l'extrémité de l'aile 9 des profilés d'habillage 6 située du coté de la face externe 3 à revêtir du panneau amovible 2, conformément à la figure 5.

Puis, on découpe grossièrement la toile 7 autour de l'ensemble panneau amovible 2-profilés d'habillage 6.

Enfin, on découpe avec précision l'excédent de toile 7 dépassant du panneau amovible 2 pour obtenir un panneau amovible 2 revêtu d'une toile 7 conforme à la figure 6.

On comprend que ces étapes peuvent ne pas être exécutées dans l'ordre indiqué. Par exemple, le panneau amovible 2 pourra être légèrement rectifié avant la mise sous tension de la toile 7 avec le dispositif de tension 13 selon l'invention.

De même, on pourra déposer de la colle sur les profilés d'habillage 6 avant d'appliquer l'ensemble panneau amovible 2-profilés d'habillage 6 sur la toile 7.

Comme la toile 7 a été préalablement chauffée puis tendue et enfin collée sur le panneau amovible 2, on comprend bien que lorsque la toile 7 refroidit, elle se rétracte légèrement, ce qui a pour effet d'augmenter la tension de la toile 7 garantissant un aspect esthétique irréprochable.

Ainsi, on comprend bien que le panneau amovible 2 revêtu d'une toile 7 retrouve son aspect esthétique tout en gardant ses propriétés initiales telles que la résistance au feu, l'isolation acoustique par exemple. En outre, dans la mesure où la toile 7 est avantageusement réalisée à partir de feuille en matériau polymère tel que le polychlorure de vinyle, le panneau amovible 2 revêtu possède par conséquent de nouvelles qualités telles que notamment : facilité d'entretien, étanchéité à l'air, à la poussière ou à l'humidité, et devient facilement lavable.

Par ailleurs, on comprend bien que cette invention est intéressante car elle permet de réhabiliter des panneaux amovibles 2 dégradés sans avoir à refaire des perçages et découpes éventuellement réalisés sur lesdits panneaux amovibles 2.

Enfin, avec ce procédé notamment, chaque panneau amovible 2 peut être revêtu de toile 7 de différents aspects et couleurs et on peut alors créer des ambiances esthétiques très intéressantes en mélangeant entre eux les aspects et les couleurs.

### Possibilité d'application industrielle

Comme décrit précédemment, l'invention trouvera une application pour tout type de fausses parois dégradées de bâtiments industriels, commerciaux, institutionnels, etc mais aussi d'habitations particulières, que l'on souhaite réhabiliter facilement tout en conservant les panneaux amovibles existants.

Par ailleurs, l'invention n'est pas limitée au revêtement de panneaux amovibles 2 parallélépipédiques, mais peut également permettre de revêtir des panneaux amovibles déjà taillés ou modifiés, de différentes formes ou encore des trappes d'accès.

De plus, les dispositifs de tension et procédé selon l'invention pourront également être utilisés pour la fabrication de nouveaux panneaux de fausse paroi constitués uniquement d'un cadre en profilés aboutés en PVC ou aluminium, par exemple, sur lequel est fixée tendue une toile souple. Ces nouveaux panneaux sont simples à réaliser et particulièrement légers car ils ne comprennent pas de panneaux amovibles 2.Enfin, il est clair que la présente invention ne se limite pas à la seule forme d'exécution de cette installation ; elle en embrasse, au contraire, toutes les variantes de réalisation et d'application couvertes par les revendications.

## Revendications

1. Dispositif de tension (13) de la toile (7) d'un dispositif de réhabilitation (1) d'un panneau amovible (2), comprenant au moins une structure (14), un caisson thermique (15) disposé à l'intérieur de ladite structure (14) et apte à chauffer ladite toile souple (7), un cadre interne (17) solidaire de façon élastique dudit caisson thermique (15), et au moins un actionneur (16) solidaire de la structure (14) et apte à mettre en mouvement le caisson thermique (15) de sorte à déplacer le caisson thermique (15) entre une position "toile au repos" et une position "toile tendue",
le dispositif étant **caractérisé en ce que**
(a) l'actionneur (16) est en outre apte à mettre en mouvement le cadre interne (17) entre une position "toile au repos" et une position intermédiaire située entre lesdites positions "toile au repos" et "toile tendue", la toile souple (7) étant en appui sur une partie du caisson thermique (15) et maintenue par son bord périphérique entre le cadre interne (17) et la structure (14), **en ce que**
(b) le caisson thermique (15) comporte un caisson creux de forme globalement parallélépipédique contenant au moins un générateur de chaleur et comprenant au moins une face inférieure (151) et une face supérieure (152) munie d'une pluralité d'orifices (153) débouchant destinés à laisser passer uniformément la chaleur générée par le générateur de chaleur, et **en ce que**
(c) le caisson thermique (15) comprend un cadre extérieur (154) disposé sur le dessus de sa face supérieure (152) et servant d'appui à la toile (7), de sorte à créer un espace résiduel (157) entre la toile (7) et ladite face supérieure (152), lorsque la toile souple (7) est tendue.

2. Dispositif de tension (13) selon la revendication 1, **caractérisé en ce que** le cadre extérieur (154) est réalisé à partir de profilés aboutés en forme générale de L ouvert comprenant chacun une première aile (155) horizontale fixée pour être en contact sur le dessus de ladite face supérieure (152) et une deuxième aile (156) servant d'appui à la toile (7).

3. Dispositif de tension (13) selon la revendication 1 ou la revendication 2, **caractérisé en ce que** le cadre interne (17) comporte des profilés aboutés de section globalement rectangulaire et est solidaire dudit caisson thermique (15) grâce à des organes de fixation (21) élastique.

4. Dispositif de tension (13) selon l'une quelconque des revendications 1 à 3, **caractérisé en ce que** le cadre interne (17) comporte au moins deux profilés opposés de dimensions suffisantes pour venir en butée sur la structure (14), cette position définissant la position intermédiaire.

5. Dispositif de tension (13) selon l'une quelconque des revendications 1 à 4, **caractérisé en ce que** le cadre interne (17) comporte des profilés de maintien (25).

6. Dispositif de tension (13) selon l'une quelconque des revendications 1 à 5, **caractérisé en ce qu'**il comporte deux actionneurs (16), chacun étant de type vérin électrique linéaire intégré dans un guidage stable.

7. Procédé de revêtement d'un panneau amovible (2) d'une fausse paroi avec un dispositif de réhabilitation (1) **caractérisé en ce qu'**il comprend au moins les étapes suivantes prises successivement ou non :
- mise sous tension de la toile (7) avec le dispositif de tension (13) selon l'une quelconque des revendications 1 à 6 ;
- mise en place en vis-à-vis d'au moins deux profilés d'habillage (6) respectivement le long de deux zones opposées dudit bord périphérique (5) du panneau amovible (2) ;
- application de l'ensemble panneau amovible (2)-profilés d'habillage (6) sur la toile (7) tendue ;
- application d'adhésif sur le pourtour de l'ensemble panneau amovible (2)-profilés d'habillage (6) ;
- découpe de l'excédent de toile (7) dépassant du panneau amovible (2).

8. Procédé de revêtement selon la revendication 7 **caractérisé en ce que** l'étape de mise sous tension de la toile (7) avec le dispositif de tension (13) comprend les étapes suivantes :
- mise en place de la toile (7) sur le caisson thermique (15) et le cadre interne (17), le caisson thermique (15) et le cadre interne (17) étant en position "toile au repos" ;
- mise en marche des générateurs de chaleur ;
- mise en mouvement du caisson thermique (15) par au moins un actionneur (16) depuis la position "toile au repos" jusqu'à la position "intermédiaire" ;
- mise en mouvement du caisson thermique (15) par l'actionneur (16) depuis la position "intermédiaire" jusqu'à la position "toile tendue" de sorte à mettre sous tension la toile (7).

9. Procédé de revêtement selon l'une quelconque des revendications 7 ou 8 **caractérisé en ce que** l'étape d'application d'adhésif est précédée d'une étape de rectification du bord périphérique (5) du panneau amovible (2).

## Patentansprüche

1. Vorrichtung zum Spannen (13) des Gewebes (7) einer Renovierungsvorrichtung (1) einer abnehmbaren Platte (2), welche mindestens eine Struktur (14) umfasst, einen Wärmekasten (15), der im Innern der besagten Struktur (14) angeordnet ist und besagtes flexible Gewebe (7) erwärmen kann, einen inneren Rahmen (17), der elastisch mit besagtem Wärmekasten (15) verbunden ist, und mindestens ein Stellglied (16), das mit der Struktur (14) fest verbunden ist und in der Lage ist, den Wärmekasten (15) so in Bewegung zu setzen, dass sich der Wärmekasten (15) zwischen einer Position mit "ungespanntem Gewebe" und einer Position mit "gespanntem Gewebe" verschiebt,
wobei die Vorrichtung **dadurch gekennzeichnet ist, dass**
(a) das Stellglied (16) des Weiteren in der Lage ist, den inneren Rahmen (17) zwischen einer Position mit "ungespanntem Gewebe" und einer Zwischenposition zwischen der besagten Position mit "ungespanntem Gewebe" und der Position mit "gespanntem Gewebe" in Bewegung zu setzen, wobei das flexible Gewebe (7) auf einem Teil des Wärmekastens (15) aufliegt und an seiner umlaufenden Kante zwischen dem inneren Rahmen (17) und der Struktur (14) gehalten wird, und dadurch, dass
(b) der Wärmekasten (15) einen hohlen, generell quaderförmigen Kasten umfasst, der mindestens einen Wärmeerzeuger enthält und mindestens eine Unterseite (151) und eine Oberseite (152) mit einer Vielzahl von Durchgangslöchern (153) umfasst, die dazu bestimmt sind, die vom Wärmeerzeuger generierte Wärme gleichmäßig hindurch zu lassen, und dadurch, dass
(c) der Wärmekasten (15) einen äußeren Rahmen (154) umfasst, der auf seiner Oberseite (152) angeordnet ist und dem Gewebe (7) als Auflage dient, sodass ein verbleibender Raum (157) zwischen dem Gewebe (7) und besagter Oberseite (152) gebildet wird, wenn das flexible Gewebe (7) gespannt ist.

2. Spannvorrichtung (13) nach Anspruch 1, **dadurch gekennzeichnet, dass** der äußere Rahmen (154) aus stumpfgestoßenen offenen Profilen in Form eines generell offenen L hergestellt ist, die jeweils einen ersten waagrechten Flügel (155) enthalten, der so befestigt ist, dass er auf der besagten Oberseite (152) anliegt, und einen zweiten Flügel (156), auf dem das Gewebe (7) aufliegt.

3. Spannvorrichtung (13) nach Anspruch 1 oder Anspruch 2, **dadurch gekennzeichnet, dass** der innere Rahmen (17) Profile mit einem generell rechteckigen Querschnitt umfasst und über elastische Befestigungselemente (21) mit besagtem Wärmekasten (15) fest verbunden ist.

4. Spannvorrichtung (13) nach einem der Ansprüche 1 bis 3, **dadurch gekennzeichnet, dass** der innere Rahmen (17) mindestens zwei gegenüberstehende Profile umfasst, die so groß bemessen sind, dass sie an der Struktur (14) anliegen, wobei diese Position die Zwischenposition ist.

5. Spannvorrichtung (13) nach einem der Ansprüche 1 bis 4, **dadurch gekennzeichnet, dass** der innere Rahmen (17) Halteprofile (25) umfasst.

6. Spannvorrichtung (13) nach einem der Ansprüche 1 bis 5, **dadurch gekennzeichnet, dass** sie zwei Stellglieder (16) vom Typ eines linearen elektrischen Zylinders umfassen, der in eine stabile Führung eingebaut wurde.

7. Verfahren zur Verkleidung einer abnehmbaren Platte (2) einer Zwischenwand mit einer Renovierungsvorrichtung (1), **dadurch gekennzeichnet, dass** es mindestens folgende Schritte in einer Abfolge hintereinander oder nicht, umfasst:
- das Spannen des Gewebes (7) mit der Spannvorrichtung (13) nach einem der Ansprüche 1 bis 6;
- das Einsetzen mindestens zweier gegenüberliegender Verkleidungsprofile (6) entlang der beiden gegenüberliegenden Bereiche der besagten umlaufenden Kante (5) der abnehmbaren Platte (2);
- das Anbringen der Baugruppe bestehend aus der abnehmbaren Platte (2) und den Verkleidungsprofilen (6) an dem gespannten Gewebe (7);
- das Auftragen von Klebstoff am Umfang der Baugruppe bestehend aus der abnehmbaren Platte (2) und den Verkleidungsprofilen (6);
- das Abtrennen des überstehenden Gewebes (7) von der abnehmbaren Platte (2).

8. Verkleidungsverfahren nach Anspruch 7, **dadurch gekennzeichnet, dass** der Schritt des Spannens des Gewebes (7) mit der Spannvorrichtung (13) die folgenden Schritte umfasst:
- das Einsetzen des Gewebes (7) auf dem Wärmekasten (15) und dem inneren Rahmen (17), wobei sich der Wärmekasten (15) und der innere Rahmen (17) in der Position mit "ungespanntem Gewebe" befinden;
- die Inbetriebnahme der Wärmeerzeuger;
- die Bewegung des Wärmekastens (15) durch mindestens ein Stellglied (16) von der Position mit "ungespanntem Gewebe" zur Zwischenposition;
- die Bewegung des Wärmekastens (15) durch das Stellglied (16) von der Zwischenposition zur Position mit "gespanntem Gewebe", so dass das Gewebe (7) gespannt wird.

9. Verkleidungsverfahren nach einem der Ansprüche 7 oder 8, **dadurch gekennzeichnet, dass** dem Schritt des Auftragens des Klebers ein Schritt der Berichtigung des umlaufenden Rahmens (5) der abnehmbaren Platte (2) vorangeht.

## Claims

1. A device (13) for tensioning the fabric (7) of a device (1) for renovating a removable panel (2), comprising at least one structure (14), a thermal chamber (15) arranged inside said structure (14) and able to heat said flexible fabric (7), an internal frame (17) resiliently secured to said thermal chamber (15), and at least one actuator (16) secured to the structure (14) and able to move the thermal chamber (15) so as to move the thermal chamber (15) between a "fabric at rest" position and a "fabric tensioned" position,
the device being **characterised in that**
a) the actuator (16) is further able to move the internal frame (17) between a "fabric at rest" position and an intermediate position situated between said "fabric at rest" and "fabric tensioned" position, the flexible fabric (17) being in abutment on a part of the thermal chamber (15) and held by its peripheral edge between the internal frame (17) and the structure (14), **in that**
(b) the thermal chamber (15) comprises a hollow chamber with a roughly parallelepipedal shape containing at least one heat generator and comprising at least one bottom face (151) and one top face (152) provided with a plurality of emerging orifices (153) intended to allow the heat generated by the heat generator to pass uniformly, and **in that**
c) the thermal chamber (15) comprises an external frame (154) arranged on the top of its top face (152) and serving as an abutment for the fabric (7), so as to create a residual space (157) between the fabric (7) and said top face (152), when the flexible fabric (7) is tensioned.

2. The tensioning device (13) according to claim 1, **characterised in that** the external frame (154) is produced from butted profiled members roughly in an open L shape, each comprising a first horizontal flange (155) fixed so as to be in contact on the top of said top face (152) and a second flange (156) serving as an abutment for the fabric (7).

3. The tensioning device (13) according to claim 1 or claim 2, **characterised in that** the internal frame (17) comprises butted profiled members with a roughly rectangular cross section and is secured to said thermal chamber (15) by means of resilient fixing members (21).

4. The tensioning device (13) according to any of claims 1 to 3, **characterised in that** the internal frame (17) comprises at least two opposite profiled members with sufficient dimensions to come into abutment on the structure (14), this position defining the intermediate position.

5. The tensioning device (13) according to any of claims 1 to 4, **characterised in that** the internal frame (17) comprises holding profiled members (25).

6. The tensioning device (13) according to any of claims 1 to 5, **characterised in that** it comprises two actuators (16), each being of the linear electrical actuator type integrated in a stable guide.

7. A method for cladding a removable panel (2) of a false wall with a renovation device (1), **characterised in that** it comprises at least the following steps taken successively or not:
- tensioning of the fabric (7) with the tensioning device (13) according to any of claims 1 to 6;
- placing of at least two cladding profiled members (6) facing each other respectively along two opposite zones of said peripheral edge (5) of the removable panel (2);
- application of the assembly consisting of removable panel (2) and cladding profile members (6) to the tensioned fabric (7);
- application of adhesive to the periphery of the assembly consisting of removable panel (2) and cladding profiled members (6);
- cutting of the excess fabric (7) projecting beyond the removable panel (2).

8. The cladding method according to claim 7, **characterised in that** the step of tensioning the fabric (7) with the tensioning device (13) comprises the following steps:
- placing of the fabric (7) on the thermal chamber (15) and the internal frame (17), the thermal chamber (15) and the internal frame (17) being in the "fabric at rest" position;
- starting of the heat generator;
- moving of the thermal chamber (15) by at least one actuator (16) from the "fabric at rest" position to the "intermediate" position;
- movement of the thermal chamber (15) by the actuator (16) from the "intermediate" position to the "fabric tensioned" position so as to tension the fabric (7) .

9. The cladding method according to either claim 7 or claim 8, **characterised in that** the step of applying adhesive is preceded by a step of planing the peripheral edge (5) of the removable panel (2).
